# EUROPEAN PATENT APPLICATION

(11) **EP 1 253 514 A1**
(43) Date of publication of application: **30.10.2002**
(21) Application number: 01303704.9
(22) Date of filing: 24.04.2001
(51) Int. Cl.: G06F 9/44

(54) **Protected resource access**

(71) Applicant: SUN MICROSYSTEMS, INC., Palo Alto, California 94303 (US)
(72) Inventor: Krivoruchko, Michael, Stillorgan, Dublin (IR)
(74) Representative: Harris, Ian Richard

(57) **Abstract**

Access is provided in an object-oriented environment by an instance of a first class to a selected protected resource of an instance of a second class. This involves defining a third class that includes a protected virtual method for accessing the selected protected resource. The first class is defined as a subclass of the third class such that the first class inherits from the third class an access-resource method for the protected resource and a pointer to an instance of the second class as an implementation of the third class. The second class is defined as a subclass of the third class such that the second class inherits from the third class and implements the protected virtual method for accessing the selected protected resource by overloading that method. With this structure in place, an instance of the first class calls the access-resource method inherited from the third class, which access-resource method uses the pointer to the instance of the second class and the overloaded method to access the resource.

## Description

### BACKGROUND OF THE INVENTION

The present invention relates to providing selective access to protected resources of an object in an object-oriented environment.

In an object-oriented environment, the resources provided by instances of classes can be defined as being public (in which case other instances of other classes can have access to them), or can be defined as protected (in which case other instances of other classes cannot normally access them).

Some languages do provide a way of allowing an instance of one class to access protected resources of the instance of another class. For example, the C++ language provides a keyword friend that lets a class specify a set of classes as "friend classes'' that can access the resources of the class. The friend keyword effectively opens up all of the resources of that class as it does not allow an explicit set of resources to be specified that can be accessed by a friend class instance. With the friend class approach, the class that makes its resources available has to be changed in order that one or more friend classes can be added.

Thus, the known keyword friend approach in C++ can be used to allow access by a client to the resources of a supplier. However, this is only possible if the client had been specifically identified as a friend in the supplier. Moreover, each time the list of clients to be classed as friends of the supplier changes, the supplier has to be rewritten to accommodate this. It will be appreciated that this is a potential source of error, particularly if it is expected that a list of clients that can have access is frequently changing. Moreover, once a client has been identified as a friend of the supplier, the client then has access to all of the resources of the supplier. This mechanism does not allow for access to only selected resources of the supplier.

Further information on the C++ language, including the use of "friends", can be found in "The C++ Programming language, Special Edition" by Bjarne Stroustrup, published by Addison Wesley, Reading Massachusetts (ISBN 0-201-70073-5).

Also, various object-oriented programming techniques are described in "Design Patterns - Elements of Reusable Object-Oriented Software" by E Gamma et al, published by Addison Wesley, Reading Massachusetts (ISBN 0-201-63361-2).

One technique, called a bridge pattern, and also known as a handle - body, enables an abstraction to be decoupled from its implementation so that the two can vary independently. When an abstraction can have several possible implementations, the usual way to address this is to use inheritance. However, inheritance binds an implementation to the abstraction permanently. The bridge pattern avoids problems caused by this binding by putting the abstraction and its implementation into different class hierarchies.

Another technique is called a proxy, or surrogate, which provides a surrogate or placeholder for another object to control access to it. One potential use for a proxy is where the creation of a real object (e.g. an image) can be expensive in processing terms. Ideally therefore, such a real object should only be created on demand. To hide that the real object is only created on command, the proxy approach provides that another object, a proxy, acts as a stand-in for the real object until the real object is to be created.

These techniques do not, however, provide a solution to the technical problem to which the present invention is directed, namely the provision of a more versatile approach to allowing an instance of one class to access protected resources of the instance of another class.

### SUMMARY OF THE INVENTION

One aspect of the invention provides a process that enables access in an object-oriented environment by an instance of a first class to a selected protected resource of an instance of a second class. The process includes defining a third class that includes a protected virtual method for accessing the selected protected resource. The first class is defined as a subclass of the third class such that the first class inherits from the third class an access-resource method for the protected resource and a pointer to an instance of the second class as an implementation of the third class. The second class is defined as a subclass of the third class such that the second class inherits from the third class and implements the protected virtual method for accessing the selected protected resource by overloading that method. With this structure in place, an instance of the first class calls the access-resource method inherited from the third class, which access-resource method uses the pointer to the instance of the second class and the overloaded method to access the resource.

An embodiment of the invention thus enables one class to access a protected resource of the other class by arranging that both classes inherit from the third class, which forms a handshake (or service handle) class. It is the result of the properties of the inheritance that enables an instance of the first class to use the protected virtual method, which is overloaded by the resource method of the second class, to access the protected resource of the second class.

In an embodiment of the invention, a constructor in the first class provides a pointer to the constructor of the third class. The access-resource method of the first class is a public method, and wherein the accessing of the resource by the instance of the first class can be initiated in response to a call to the access-resource method of the instance of the first class.

An embodiment of the invention finds application in a C++ language environment.

The resource can comprise a service, data or functionality or a combination thereof.

Another aspect of the invention provides an object-oriented program product operable to carry out the above mentioned process for enabling access in an object-oriented environment by an instance of a first class to a selected protected resource of an instance of a second class. The object-oriented program product can be provided on a carrier medium.

A further aspect of the invention provides a computer system comprising a processor, memory, and computer code that is operable to control the processor to perform the steps of the aforementioned process.

An embodiment of the invention can provide a C++ idiom that enables an instance of a first class to access the protected resources of another class where first class does not inherit from that other class.

Further aspects and advantages of the invention will become apparent from the following description of a preferred embodiment.

### BRIEF DESCRIPTION OF THE DRAWINGS

Exemplary embodiments of the present invention will be described hereinafter, by way of example only, with reference to the accompanying drawings in which like reference signs relate to like elements and in which:
Figure 1 is a schematic block diagram of a computer system;
Figure 2 is a schematic representation of software components forming an environment for an implementation of the present invention;
Figure 3 is a schematic block diagram of software components of an embodiment of the invention; and
Figure 4 is a flow diagram illustrating the operation of an embodiment of the invention.

### DESCRIPTION OF PARTICULAR EMBODIMENTS

Exemplary embodiments of the present invention are described in the following with reference to the accompanying drawings.

An exemplary embodiment of the present invention will now be described, by way of example only. The exemplary embodiment of the present invention is described in the context of a C++ language environment and assumes knowledge of the C++ language environment. For further details of the C++ language can be found in any number of publicly available books, for example in the book entitled "The C++ Programming language, Special Edition" by Bjame Stroustrup as referenced earlier. It should, however, be understood that the invention is not limited to in its application to the C++ language environment and could find application in other language environments.

A C++ environment can be provided, for example, in a computer system, whether that be a stand-alone or a networked computer system, as will be apparent to one skilled in the computing arts.

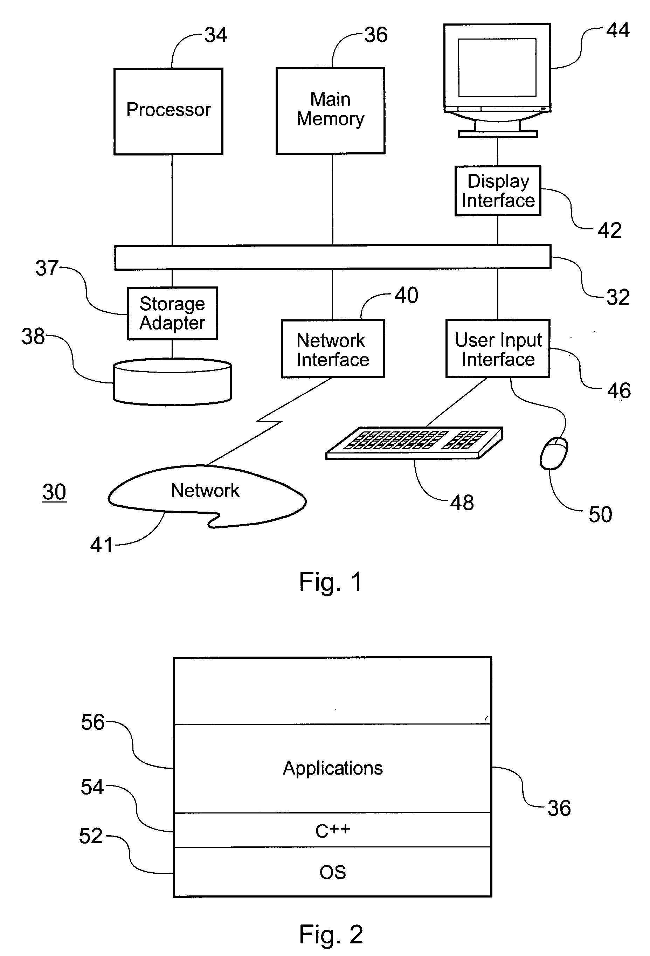

Figure 1 is a schematic representation of some typical hardware components to be found in a computer system 30. A processor 34 is connected to a bus system 32 that could comprise one or more different buses. Main memory 36 is also connected to the bus system 32 and is accessible by the processor 34. One or more storage devices 38 are connected to the bus system via a storage adapter 37. A network interface 40 can connect the computer system 30 to an external network 41. A user input interface 46 connects user input devices such as a keyboard 48 and a pointing device 50 to the bus system 32. A display interface 42 connects a display device 44. It will be appreciated that Figure 1 is a schematic representation, only, of typical hardware components to be found in a computer system, and it will be appreciated that the invention could be implemented using any conventional computer technology.

Figure 2 represents software components for the computer system 30 of Figure 1. The software components will typically be held in the storage devices 38 and will be loaded into the main memory 36 of the computer system as required, for example on turning on the computer system. Figure 2 illustrates an operating system 52 within the main memory 36. C++ run time components 54 run on the operating system 52 and support C++ user applications 56.

A specific example of the invention will be described in which two classes are defined, namely a first class (client) and a second class (supplier). In this example, the client needs to have an access to at least one protected resource that belongs to the supplier. The protected resource (or protected member) could be an attribute or a method.

An embodiment of the invention employs inheritance in an object-oriented environment to enable selective access by a client to one or more or all of the resources of the supplier. Inheritance is the process in an object oriented environment whereby a derived class inherits members of its base classes and can access the public and protected members it inherits.

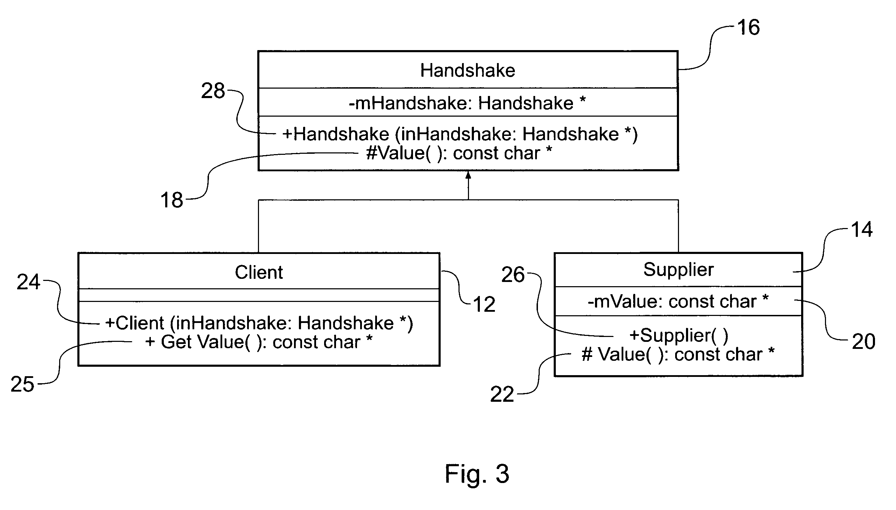

In accordance with an embodiment of the invention, as illustrated in Figure 3, each of the first and second classes (the client 12 and the supplier 14) are defined as classes that are derived and thereby inherit from a third class 16. This third class 16 (hereinafter ''handshake") could be thought of as a "friendship" class that provides for communication between the first and second classes.

The handshake 16 includes a protected virtual method 18 that provides a vehicle enabling, in use, a selected one or more protected resources 20 from among the resources of an instance of the supplier to be accessed. However, the handshake 16 does not need to know about the resource(s) to be accessed as this protected virtual method 18 will be overloaded by a resource method 22 of the supplier. In other words, the resource method 22 has the effect of replacing the protected virtual method 18 as an effect of inheritance.

The handshake 16 defines explicitly the resource(s) 20 of the supplier 14 that can be accessed by clients. At the same time the handshake decouples the supplier 14 implementation from the services it provides.

The client 12 inherits the protected virtual method 18 from the handshake 16 and a pointer to an instance of the supplier 14 as an implementation of the handshake 16. The pointer is implemented as a constructor 24 of the client that provides a pointer to a constructor 26 of the supplier, the latter forming an implementation of the constructor 28. The client includes an access-resource method 25.

The supplier 14 inherits from the handshake 16 and implements the protected virtual method 18 for accessing the selected protected resource 20 by overloading that protected virtual method with the resource method 22.

In order then to access a protected resource 20 of the supplier 14, an instance of the client 12 (or another object) calls the access-resource method 25. The access-resource method 25 uses the pointer to the instance of the second class and the protected virtual method 28 as overloaded by the resource method 22 to access the resource 20.

As mentioned above, the supplier 14 overloads the protected virtual method 28 of the handshake 16 with a resource method as a result of the inheritance of an instance of the supplier 14 from the handshake 16. Moreover, as a result of inheritance of the client 12 from the handshake 16, and using the pointer to the supplier, the access-resource method 25 of an instance of the client 12 is able to use the resource method 22 that overloads the protected virtual method 18 to return the protected resource 20 to the instance of the client 12.

This is possible as both the client 12 and the supplier 14 are subclasses of the handshake 16.

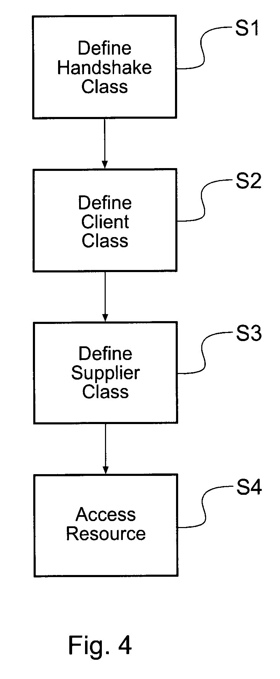

Figure 4 is a flow diagram illustrating the process whereby access in an object-oriented environment by an instance of a first class to a selected protected resource of an instance of a second class can be achieved.

Step S1 comprises defining a handshake class that includes a protected virtual method for accessing the selected protected resource.

Step S2 comprises defining a client class as a subclass of the handshake class, whereby the client class inherits from the handshake class an access-resource method for the protected resource and a pointer to an instance of a supplier class as an implementation of the handshake class.

Step S3 comprises defining the supplier class as a subclass of the handshake class, whereby the supplier class inherits from the handshake class and implements the protected virtual method for accessing the selected protected resource by overloading that method.

Step S4 then comprises an instance of the client class calling the access-resource method inherited from the third class, which access-resource method uses the pointer to the instance of the second class and the overloaded method to access the resource.

The access-resource method of the client can be a public method. In this case, in step S4, the accessing of the resource by the instance of the client is initiated in response to a call to the access-resource method of the instance of the client by another class of object, public classes being generally accessible to other objects.

A specific example of an implementation of the invention will now be described with reference to Table 1 below.

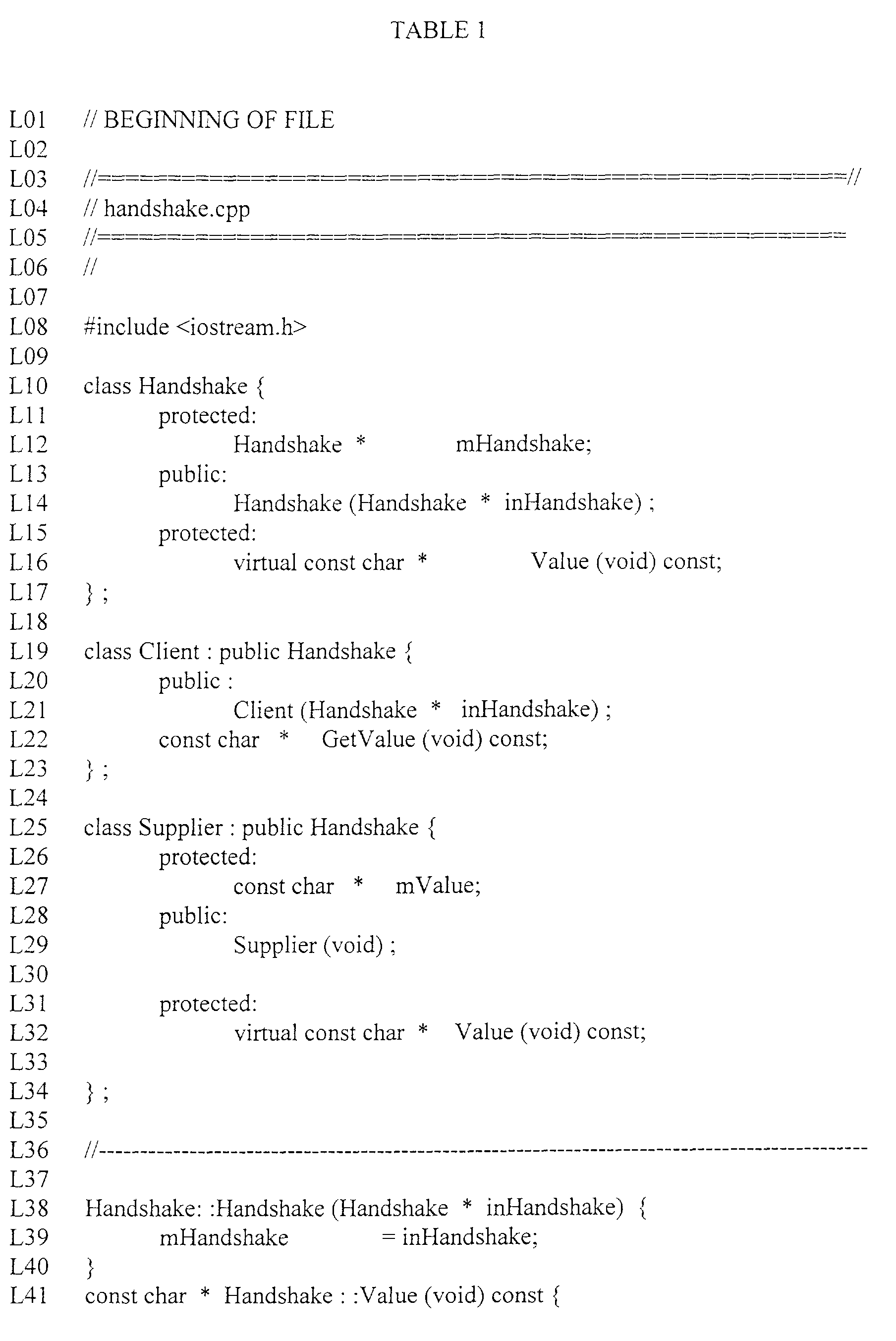

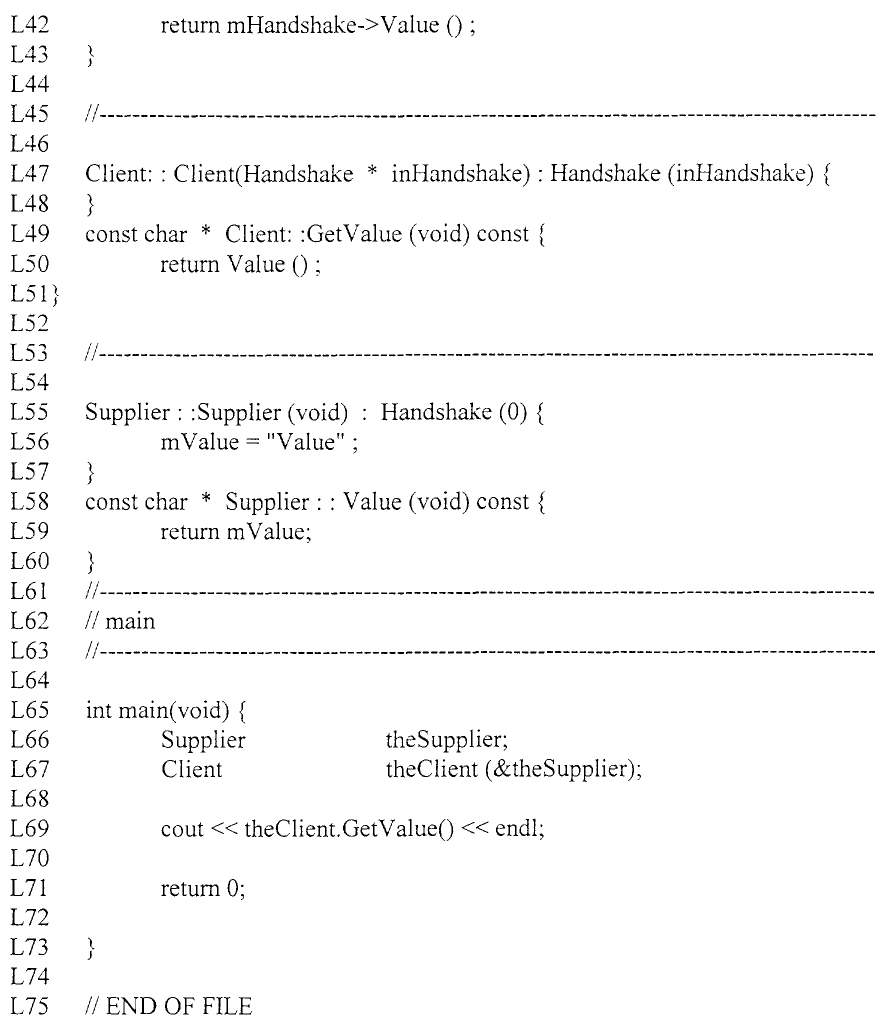

The example shown in Table 1 is for use in a C++ environment. The exemplary program code illustrated in Table 1 will now be described with reference to the line numbers L01-L75. It should be noted that the line numbers L01 - L75 do not form part of the program code, but have been added simply for the purposes of identifying lines in the code in the following description.

Lines L10-L17 define the handshake class.

Lines L11 and L12 define a protected pointer to the handshake.
Lines L13 and L14 define a public constructor for initiating an instance of the handshake class.
Lines L15 and L16 define a protected virtual default method of the handshake class for retrieving the resource called "Value".

Lines L19-L23 define the client class.
Line L19 defines that the client class is a subclass that is derived from and thereby inherits from the handshake class.
Lines L 20 and L21 identify a constructor for initiating an instance of the client class. As it identifies the same name as for the handshake class, it inherits the pointer from the handshake class, whereby it implements a handshake class pointer.
Line L22 defines a public resource access method of the client class for accessing the resource called "Value".

Lines L25-L34 define the supplier class.
Line L25 defines that the supplier class is a subclass that is derived from and thereby inherits from the handshake class.
Lines L26 and L27 define a protected resource called "Value".
Lines L28 and L29 identifies a void constructor for the supplier class.
Lines L31 and 32 define a resource method for retrieving the resource called "Value". This resource method overloads the protected virtual default method of the handshake class. The reasons for this are that the supplier class inherits from the handshake class and the resource method of the supplier class has the same name as the protected virtual default method of the handshake class.

Lines L38 - L43 illustrate an instance of the handshake class.
Lines L38 - L40 implement the handshake class constructor.
Lines L41 and L42 illustrate the default implementation of the resource access method of the handshake class for this example. This implementation allows the client class instance to access the protected resource of the instance of the supplier class.

Lines L47 - L51 illustrate an instance of the client class.
Lines L47 and L48 implement the client class constructor. The client class is derived from the handshake class so the client class constructor calls the handshake class constructor.
Lines L49 and L50 illustrates the client method that uses the default implementation of the handshake class. This method serves to show how the supplier protected resource can be accessed from the client.

Lines L55 - L60 illustrate an instance of the supplier class.
Lines L55 - L57 implement the supplier class constructor. The supplier class is derived from the Handshake class so the supplier class constructor calls the Handshake class constructor.
Lines L58 and L59 illustrates the supplier's implementation of the access-resource method inherited from the handshake. The supplier 's implementation provides the access to the resource that forms a protected member of the supplier class.

Lines L65 - L73 illustrates how this example works in practice.
Line 66 illustrates the creation of an instance of a supplier class.
Line 67 illustrates the creation of an instance of a client class.
Line 69 illustrates the effect of the present example for retrieving a value that belongs to 'theSupplier' object using 'theClient' object's ability to access protected members of 'theSupplier'. Here 'cout' is an object that represents the standard output stream.

Accordingly, there has been described, a process whereby an instance of a first class can access a selected protected resource of an instance of a second class in an object-oriented environment. This involves defining a third class that includes a protected virtual method for accessing the selected protected resource. The first class is defined as a subclass of the third class such that the first class inherits from the third class an access-resource method for the protected resource and a pointer to an instance of the second class as an implementation of the third class. The second class is defined as a subclass of the third class such that the second class inherits from the third class and implements the protected virtual method for accessing the selected protected resource by overloading that method. With this structure in place, an instance of the first class calls the access-resource method inherited from the third class, which access-resource method uses the pointer to the instance of the second class and the overloaded method to access the resource.

Although a particular embodiment of the invention has been described, it will be appreciated that the invention is not limited thereto and that many modifications, including additions, deletions and substitutions may be made within the scope of the claimed invention.

For example, in the above-described embodiment, the use of the handshake, or third class is used to enable a first class (client) to access protected resources of a second class (supplier). However, the approach described above could also enable the second class to access protected resources of the first class. This can be achieved by:
additionally providing the first class with additional features equivalent to those of the supplier described above;
additionally providing the second class with additional features equivalent to those of the client described above; and
additionally providing the third class with additional features equivalent to those of the handshake described above,
where the additional features having different names from those of the set of features described for the main embodiment, in order that they can be differentiated in operation.

## Claims

1. A process for enabling access in an object-oriented environment by an instance of a first class to a selected protected resource of an instance of a second class, the process comprising:
- defining a third class that includes a protected virtual method for accessing the selected protected resource;
- defining the first class as a subclass of the third class such that the first class inherits from the third class an access-resource method for the protected resource and a pointer to an instance of the second class as an implementation of the third class;
- defining the second class as a subclass of the third class such that the second class inherits from the third class and implements the protected virtual method for accessing the selected protected resource by overloading that method; and
- an instance of the first class calling the access-resource method inherited from the third class, which access-resource method uses the pointer to the instance of the second class and the overloaded method to access the resource.

2. The method of claim 1, wherein a constructor of the first class provides a pointer to a constructor of the third class.

3. The method of claim 1 or claim 2, wherein the access-resource method of the first class is a public method, and wherein the accessing of the resource by the instance of the first class is initiated in response to a call to the access-resource method of the instance of the first class.

4. The process of any preceding claim, wherein the object-oriented environment comprises a C++ language environment.

5. The process of any preceding claim, wherein the resource comprises data.

6. The process of claims 1 to 4, wherein the resource comprises a function.

7. A computer program product comprising program code for enabling access in an object-oriented environment by an instance of a first class to a selected protected resource of an instance of a second class, the program code being operable:
- to define a third class that includes a protected virtual method for accessing the selected protected resource;
- to define the first class as a subclass of the third class such that the first class inherits from the third class an access-resource method for the protected resource and a pointer to an instance of the second class as an implementation of the third class; and
- to define the second class as a subclass of the third class such that the second class inherits from the third class and implements the protected virtual method for accessing the selected protected resource by overloading that method;
- an instance of the first class being operable to call the access-resource method inherited from the third class, which access-resource method is operable to use the pointer to the instance of the second class and the overloaded method to access the resource.

8. The computer program product of claim 7, wherein a constructor of the first class provides a pointer to a constructor of the third class.

9. The computer program product of claim 7 or claim 8, wherein the access-resource method of the first class is a public method, and wherein the instance of the first class is operable to access the resource in response to a call to the access-resource method.

10. The computer program product of any of claims 7 to 9, wherein the object-oriented environment comprises a C++ language environment.

11. The computer program product of any of claims 7 to 10 wherein the program code is embodied on a carrier medium.

12. A computer system comprising a processor, memory, and program code that is held in memory and is operable to control the processor to enable access in an object-oriented environment by an instance of a first class to a selected protected resource of an instance of a second class, the program code being operable:
- to define a third class that includes a protected virtual method for accessing the selected protected resource;
- to define the first class as a subclass of the third class such that the first class inherits from the third class an access-resource method for the protected resource and a pointer to an instance of the second class as an implementation of the third class; and
- to define the second class as a subclass of the third class such that the second class inherits from the third class and implements the protected virtual method for accessing the selected protected resource by overloading that method;
- an instance of the first class being operable to call the access-resource method inherited from the third class, which access-resource method is operable to use the pointer to the instance of the second class and the overloaded method to access the resource.

13. The computer system of claim 12, wherein a constructor of the first class provides a pointer to a constructor of the third class.

14. The computer system of claim 12 or claim 13, wherein the access-resource method of the first class is a public method, and wherein the instance of the first class is operable to access the resource in response to a call to the access-resource method.

15. The computer system of any of claims 12 to 14, wherein the object-oriented environment comprises a C++ language environment.

16. The computer system of any of claims 12 to 15, wherein the resource comprises data.

17. The computer system of any of claims 12 to 15, wherein the resource comprises a function.
